(19)

Europäisches Patentamt
European Patent Office
Office européen des brevets

(11) **EP 2 261 641 A2**

(12) **EUROPÄISCHE PATENTANMELDUNG**

(43) Veröffentlichungstag:
**15.12.2010 Patentblatt 2010/50**

(51) Int Cl.:
***G01N 21/64*** *(2006.01)*

(21) Anmeldenummer: **10164439.1**

(22) Anmeldetag: **31.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **12.06.2009 DE 102009025561**

(71) Anmelder: **BAM Bundesanstalt für Materialforschung und -prüfung 12205 Berlin (DE)**

(72) Erfinder:
• **Flachenecker, Günter 30163, Hannover (DE)**
• **Resch-Genger, Ute 12203, Berlin (DE)**

(74) Vertreter: **Zimmermann & Partner Josephspitalstrasse 15 80331 München (DE)**

(54) **Anordnung und Verfahren zur Bestimmung der Lumineszenzquantenausbeute einer lumineszierenden Probe**

(57) Die Erfindung betrifft eine optische Anordnung (1) zur Bestimmung der absoluten Lumineszenzquantenausbeute einer lumineszierenden Probe (8) mit
(a) einer Emissionsmesseinheit (2) umfassend:
- einen bifokalen Hohlkörper (16) mit zwei konjugierten Brennpunkten (F1, F2) und mit einer gerichtet reflektierenden Innenwand, wobei der Hohlkörper (16) im Bereich des ersten Brennpunkts (F1) eine Probenaufnahme zur Anordnung der Probe (8) und auf der Seite des zweiten Brennpunkts (F2) eine freie Apertur (19) aufweist, und
- eine optische Einrichtung (20) zur Sammlung des im zweiten Brennpunkt (F2) fokussierten Lichts und Einkopplung in ein Spektrometer (25),
und mit

(b) einer Absorptionsmesseinheit (3) zur Erfassung einer von der Probe (8) transmittierten Strahlung.

Fig.2

EP 2 261 641 A2

**Beschreibung**

Die Erfindung betrifft eine optische Anordnung sowie ein Verfahren zur Bestimmung der absoluten Photolumineszenzquantenausbeute von transparenten und/oder streuenden Materialien ohne die Verwendung von Vergleichsstandards.

Die Photolumineszenz (im Folgenden auch nur Lumineszenz genannt) ist eine spontane, durch Absorption von Licht angeregte Emission beim Übergang eines elektronisch angeregten Zustands in einen Zustand niedrigerer Energie. Typischerweise ist das von dem Material emittierte Licht energieärmer als das zuvor absorbierte Licht. Zu den Photolumineszenzphänomenen zählen die lang anhaltende Phosphoreszenz sowie die sehr schnell abklingende Fluoreszenz.

Die Photolumineszenzquantenausbeute $\phi$ bezeichnet das Maß für die Effizienz der Konversion von zuvor absorbiertem Licht in emittierte Photonen und ist definiert als das Verhältnis der Anzahl der von einer Probe eines lumineszierenden Materials absorbierten Photonen zu der Anzahl der von dem Material emittierten Photonen. Sie stellt somit den fundamentalsten Parameter für die Charakterisierung optischer emittierender Materialien dar, beispielsweise von Laserfarbstoffen oder Emittermaterialien für LED/OLED-Systeme, sowie für die Sensitivität fluorimetrischer Analyseverfahren.

Die Messung von Lumineszenzquantenausbeuten erfolgt in der Regel durch optische oder kalorimetrische Verfahren.

Kalorimetrische Verfahren basieren darauf, dass bei einem strahlungslosen Zerfall des angeregten Zustands der Probe ein Teil der zuvor absorbierten Anregungsenergie als Wärme abgegeben wird. Die Bestimmung der Lumineszenzquantenausbeute erfolgt bei kalorimetrischen Verfahren über die Messung dieser Wärmeabgabe der zu untersuchenden Probe und Vergleich mit einer nicht-lumineszierenden Referenzprobe.

Die optischen Verfahren zur Bestimmung der Lumineszenzquantenausbeute lassen sich in relative und absolute Messverfahren unterteilen. Relative optische Verfahren verwenden grundsätzlich eine Referenzprobe, einen so genannten Quantenausbeutestandard, dessen spektrale Strahldichte beziehungsweise Emissionsintensität mit der zu untersuchenden Probe direkt verglichen wird. Bei den im Rahmen der vorliegenden Anmeldung interessierenden absoluten optischen Methoden wird eine Absorptions- und Emissionsmessung durchgeführt und die Quantenausbeute über das Verhältnis der Anzahl der emittierten Photonen zu der Anzahl der absorbierten Photonen bestimmt.

Die relativen optischen und kalorimetrischen Verfahren weisen grundsätzlich den Nachteil auf, dass der erforderliche Vergleichsstandard oder die Referenzprobe spezielle Bedingungen erfüllen muss und individuell auf die zu untersuchende Probe abzustimmen ist. Dies ist oft Ursache für systematische Messfehler. Generell sind daher absolute Messverfahren vorzuziehen.

Die meisten der absoluten optischen Verfahren verwenden einen kugelförmigen Hohlkörper mit einer diffus reflektierenden Innenwand - eine so genannte Ulbrichtkugel -, in der sich die Probe befindet. Typischerweise besitzt die für diese Verfahren verwendete Ulbrichtkugel eine Lichteintrittsöffnung zur Einkopplung einer Anregungsstrahlung sowie eine Lichtaustrittsöffnung zur Auskopplung der auf dieser auftreffenden Strahlung in ein Spektrometer. Das in die Hohlkugel eingekoppelte Anregungslicht und die von der Probe ausgesendete Emissionsstrahlung verteilen sich aufgrund der vielfachen Reflexionen an der diffus reflektierenden Innwand homogen und isotrop im Inneren des Hohlraums. Absolute optische Verfahren unter Verwendung einer Ulbrichtkugel sind beispielsweise aus Publikationen von Greenham et al. (Greenham, Samuel, Hayes, Phillips, Kessener, Moratti, Holmes und Friend (1995) Chem. Phys. Lett. 241: 89) und von de Mello et al. (de Mello, Wittmann und Friend (1997) Adv. Mater. 9: 230) bekannt, wobei das letztgenannte Verfahren die Grundlage eines seit 2007 kommerziell erhältlichen Gerätes der Firma Hamamatsu ist. Die optische Anordnung gemäß de Mello et al. umfasst eine Ulbrichtkugel, in deren Inneren die Probe an zwei unterschiedlichen Positionen eingebracht werden kann. Zudem ist in einem Winkel von 90° zum Anregungsstrahl eine optische Faser hinter einer diffus reflektierenden Abschirmung an der Lichtaustrittsöffnung angebracht, die das Licht in ein CCD-Spektrometer einkoppelt. Für die Bestimmung der Quantenausbeute werden relative Absorptions- und Emissionsmessungen durchgeführt, wozu nacheinander drei Messungen ausgeführt werden, nämlich a) eine Messung ohne Probe, b) eine Messung mit nur indirekt über die Streustrahlung der Innenwand bestrahlten Probe und c) eine Messung mit der direkt bestrahlten Probe. In der Konfiguration c) wird das transmittierte Licht diffus an der Kugelwand reflektiert und kann dann erneut von der Probe absorbiert werden, was zu einer erhöhten Fluoreszenz führt. Die Messung b) dient dazu, diese zusätzliche Absorption und Fluoreszenz in der Konfiguration c) zu berücksichtigen, die durch die an der Kugelwand gestreuten Photonen verursacht wird. Die in das Spektrometer eingekoppelte Strahlung besteht aus der an der Probe transmittierten und/oder elastisch gestreuten Anregungsstrahlung sowie der emittierten Lumineszenzstrahlung der Probe. Ist das verwendete Anregungslicht spektral schmalbandig, lässt sich die energetisch rot-verschobene, emittierte Lumineszenzstrahlung (Stokes-Shift) spektrometrisch von der Anregungsstrahlung trennen. Zur Bestimmung der Quantenausbeute wird allein die Absorption und Fluoreszenz berücksichtigt, die bei der ersten, direkten Bestrahlung der Probe in der Konfiguration c) stattfindet, denn das restliche (transmittierte) auf die Probe eingestrahlte Licht erfährt aufgrund der Vielfachreflexionen in der Ulbrichtkugel zusätzliche Verluste, die den eigentlichen Absorptionsgrad der Probe verfälschen. Alternativ ist bekannt, die Absorption nur durch indirekte Streustrahlung durchzuführen (Shea Rohwer und Martin (2005) J. Lumin. 115: 77). Die so bestimmten Quantenausbeuten zeigen jedoch systematische Abweichungen.

Nachteilig bei der Verwendung einer Ulbrichtkugel zur Bestimmung der Photolumineszenzquantenausbeute ist vor allem die Reabsorption von Fluoreszenzlicht, die durch die Ulbrichtkugel drastisch verstärkt wird und tendenziell zu niedrigen Werten für die Quantenausbeuten führt. Die nachträgliche Berücksichtigung der Reabsorption ist zum Teil sehr aufwendig, wenn nicht gar unmöglich. Um Absorption, Reabsorption und Fluoreszenz noch gut trennen zu können, sollte die gewählte Anregungswellenlänge spektral nicht mit der Fluoreszenzbande überlappen. Zur Bestimmung der Reabsorption muss das Lumineszenzspektrum der Probe zusätzlich ohne Ulbrichtkugel gemessen werden. Durch einen Vergleich der gerätespezifisch spektral korrigierten Lumineszenzspektren mit und ohne Ulbrichtkugel lässt sich dann bis zu einem gewissen Grade die Reabsorption bestimmen.

Zudem ist das Verfahren von de Mello et al. aufgrund der sequenziellen Messungen nicht für die Messung an instabilen Proben oder an sich dynamisch ändernden Systemen (beispielsweise durch eine chemische Reaktion) geeignet. Hinzu kommt, dass bei der sequenziellen Messung Intensitätsschwankungen der Anregungslichtquelle zwischen den verschiedenen Messungen zu einer fehlerhaften Bestimmung der Quantenausbeute führen. Zudem ist bei inhomogenen Proben nur eine schlechte räumliche Zuordnung der Quantenausbeuten möglich, das heißt die Quantenausbeute kann nur mit einer geringen Ortsauflösung bestimmt werden, da ein Teil des gestreuten und transmittierten Lichts die Probe an einer anderen Stelle anregen kann, die nicht im primären Anregungslichtstrahl liegt.

Aufgabe der vorliegenden Erfindung ist es daher, eine optische Anordnung zur Bestimmung der absoluten Photolumineszenzquantenausbeute vorzuschlagen, welche die Nachteile des Standes der Technik überwindet. Insbesondere soll die Reabsorption der Lumineszenz durch die Probe und die damit verbundene Verfälschung der Lumineszenzquantenausbeute vermieden werden. Idealerweise soll ferner eine gleichzeitige Messung der Absorption und der Lumineszenzemission erfolgen, um Verfälschungen durch eine zeitlich sich verändernde Anregungsstrahlung auszuschließen. Ferner soll ein entsprechendes Verfahren zur Bestimmung der absoluten Lumineszenzquantenausbeute zur Verfügung gestellt werden.

Diese Aufgaben werden durch eine optische Anordnung sowie durch ein Verfahren zur Bestimmung der absoluten Photolumineszenzquantenausbeute mit den Merkmalen der unabhängigen Ansprüche gelöst.

Die erfindungsgemäße optische Anordnung zur Bestimmung der absoluten Lumineszenzquantenausbeute einer lumineszierenden Probe umfasst:

(a) eine Emissionsmesseinheit umfassend

- einen bifokalen Hohlkörper mit zwei konjugierten Brennpunkten und mit einer gerichtet reflektierenden Innenwand, wobei der Hohlkörper im Bereich des ersten Brennpunkts eine Probenaufnahme zur Anordnung der Probe und auf der Seite des zweiten Brennpunkts eine freie Apertur aufweist, und
- eine optische Einrichtung zur Sammlung des im zweiten Brennpunkt fokussierten Lichts und Einkopplung in ein Spektrometer,

sowie

(b) eine Absorptionsmesseinheit zur Erfassung einer von der Probe transmittierten Strahlung.

Die erfindungsgemäße optische Anordnung weist somit neben der Absorptionsmesseinheit (bzw. Transmissionsmesseinheit) eine Emissionsmesseinheit auf. Letztere umfasst einen bifokalen Hohlkörper, welcher eine gerichtet reflektierende Innenwand aufweist. Die Form des bifokalen Hohlkörpers ist so gestaltet, dass dieser zwei konjugierte Brennpunkte aufweist, so dass Licht, welches im ersten Brennpunkt ausgestrahlt wird, in den zweiten Brennpunkt fokussiert wird. Weiter ist im Bereich des ersten Brennpunkts eine Probenaufnahme zur Anordnung der lumineszierenden (fluoreszierenden oder phosphoreszierenden) Probe vorgesehen. Auf der Seite des zweiten Brennpunkts weist der bifokale Hohlkörper eine freie Apertur auf, die sich vorzugsweise im Wesentlichen symmetrisch um eine durch die beiden Brennpunkte definiere optische Achse öffnet. Die Emissionseinheit umfasst ferner eine optische Einrichtung zur Sammlung des im zweiten Brennpunkt des bifokalen Hohlkörpers fokussierten Lichts und zur Einkopplung desselben in ein Spektrometer.

Zentraler Bestandteil der vorliegenden Erfindung ist der bifokale Hohlkörper der Emissionsmesseinheit, der zwei konjugierte Brennpunkte aufweist. Dies bedeutet, dass eine im ersten Brennpunkt von der Probe emittierte Strahlung (Fluoreszenz- oder Phosphoreszenzstrahlung) und/oder elastisch gestreute Strahlung nach der Reflexion an der gerichtet reflektierenden Innenwand des Hohlkörpers in den zweiten liegenden Brennpunkt fokussiert wird. Auf diese Weise wird die emittierte bzw. gestreute Strahlung unter einem großen Raumwinkel nahezu quantitativ vollständig in dem zweiten Brennpunkt gesammelt und kann durch die weiter führende optische Einrichtung effizient in ein Spektrometer eingekoppelt werden. Ein Körper, der diese Forderung ideal erfüllt, ist ein Rotationsellipsoid, der in bevorzugter Ausgestaltung der Erfindung eingesetzt wird. Es kann grundsätzlich aber jeder Ellipsoid oder ellipsoidähnliche Hohlkörper, beispielsweise ein leicht abgeplatteter Ellipsoid als bifokaler Hohlkörper eingesetzt werden. Entscheidend ist, dass Strahlung, die aus einem kleinem Volumen, das den ersten Brennpunkt umgibt, in einen kleinen Volumenbereich, der den zweiten Brennpunkt umgibt, fokusssiert wird. Auf diese Weise kann die Strahlung, die in der näheren Umgebung des zweiten Brennpunktes fokussiert wird, effizient in ein Detektionssystem eingekoppelt werden.

Durch die sofortige Auskopplung der in dem bifokalen Hohlkörper emittierten Strahlung wird die Reabsorption derselben durch die Probe verhindert. Ferner kann durch die Verwendung des bifokalen Hohlkörpers, insbesondere eines Ellipsoiden, auch die elastische Lichtstreuung an der Probe erfasst werden, die sich energetisch von der Lumineszenzstrahlung unterscheidet. Schließlich ermöglicht die erfindungsgemäße Emissionsmesseinheit auch die Erfassung ortsspezifischer Informationen, indem die Probenposition innerhalb des ersten Brennpunktes des bifokalen Hohlkörpers variiert wird.

In einer bevorzugten Ausgestaltung umfasst die optische Einrichtung zur Sammlung des im zweiten Brennpunkt des bifokalen Hohlkörpers fokussierten Lichts einen zweiten, kugelförmigen Hohlkörper (im Folgenden auch Ulbrichtkugel genannt) mit einer diffus reflektierenden Innenwand und einer Lichteintrittsöffnung und einer Lichtaustrittsöffnung zur Einkopplung des auf die Lichtaustrittsöffnung treffenden Lichts in ein Spektrometer. Der bifokale Hohlkörper und die Ulbrichtkugel sind im Wesentlichen so relativ zueinander angeordnet oder anordnenbar, dass die Lichteintrittsöffnung der Ulbrichtkugel auf einer durch die beiden Brennpunkte des bifokalen Hohlkörpers definierten optischen Achse liegt. Es ist in diesem Zusammenhang vorteilhaft, wenn die Ulbrichtkugel mit einem möglichst geringen Abstand zum zweiten Brennpunkt angeordnet oder anordnenbar ist, wobei sie bevorzugt den zweiten Brennpunkt des bifokalen Hohlkörpers einschließt. Mit anderen Worten wird in dieser Ausgestaltung eine im ersten Brennpunkt emittierte Strahlung durch die gerichtete Reflexion im bifokalen Hohlkörper in den zweiten, in der Ulbrichtkugel liegenden Brennpunkt fokussiert. In dieser Ausführung wird der Vorteil der Ulbrichtkugel, die Lumineszenz aus einem sehr großen Raumwinkel zu sammeln, optimal genutzt.

Durch den erfindungsgemäßen Aufbau der den bifokalen Hohlkörper aufweisenden Emissionsmesseinheit wird das gemäß dem Stand der Technik aus der Probe und der Ulbrichtkugel bestehende System voneinander entkoppelt. Die von der Probe im ersten Brennpunkt des bifokalen Hohlkörpers emittierte Strahlung wird nach Art eines Ellipsoidreflektors in den zweiten Brennpunkt fokussiert und somit in den kugelförmigen, nach Art einer Ulbrichtkugel gestalteten Hohlkörper eingekoppelt, wo sie homogen und unpolarisiert im Hohlraum gestreut wird, bis sie auf die Lichtaustrittsöffnung der Ulbrichtkugel trifft, von wo sie in ein Spektrometer eingekoppelt werden kann. Die Ulbrichtkugel hat die Funktion einer Lichtfalle. Deshalb wird die Lichteintrittsöffnung der Ulbrichtkugel vorteilhaft möglichst klein gehalten, um Rückkopplungen zur Probe zu vermeiden. Eventuell sind hierfür die Verluste in der Ulbrichtkugel über die Reflektivität der Wände oder zusätzlicher Löcher oder vorzugsweise durch eine effizientere Einkopplung in das Detektionssystem (Monochromator, Detektor) zu erhöhen. (Ein eventuell in der Ulbrichtkugel auftretender Verlust bedingt durch eine schlechtere Reflektivität der Innenwand oder zusätzlicher Löcher wird rechnerisch durch die Kalibrierung der spektralen Empfindlichkeit der gesamten Emissionseinheit berücksichtigt.)

Es ist alternativ zur Ulbrichtkugel aber auch möglich, mittels einer anderen Sammeloptik das aus dem bifokalen Hohlkörper austretende Lumineszenz- und Streulicht in das Spektrometer einzukoppeln. Insbesondere kann eine Linse mit einer großen Apertur so positioniert werden, dass der Brennpunkt der Linse mit dem zweiten Brennpunkt des bifokalen Körpers überlappt. Die optische Achse der Linse fällt dabei mit der optischen Achse des bifokalen Hohlkörpers, auf dem die beiden Brennpunkte des bifokalen Hohlkörpers liegen, zusammen. Mittels einer weiteren Optik, beispielsweise in Form eines Teleskops, wird dann das durch die Linse gesammelte Licht effizient in das Spektrometer eingekoppelt.

Unter einer "gerichtet reflektierenden Innenwand" wird im Rahmen der vorliegenden Erfindung eine hochglatte Fläche verstanden, deren Rauhigkeit weit unterhalb der verwendeten Wellenlänge liegt, so dass eine auftreffende Strahlung nach den optischen Reflexionsgesetzen nach Art eines Spiegels gerichtet reflektiert wird. Ferner wird unter einer "diffus reflektierenden Innenwand" eine Wand mit einer relativ großen Rauhigkeit bezüglich der Wellenlänge verstanden, so dass das auftreffende Licht diffus in sämtliche Raumrichtungen reflektiert (gestreut) wird. Ferner wird im Rahmen der Erfindung unter einer (gerichtet oder diffus) "reflektierenden" Wand verstanden, dass der Hauptanteil der auftreffenden Strahlung reflektiert wird und ein möglichst geringer Anteil absorbiert wird. Insbesondere weist der bifokale Hohlkörper und/oder die Ulbrichtkugel jeweils einen Reflexionsgrad von mindestens 50 % bezogen auf die einfallende Strahlung, vorzugsweise von mindestens 70 %, besonders bevorzugt von mindestens 80 %, auf. Im Idealfall erfolgt praktisch keine Absorption durch die Innenwand des bifokalen Hohlkörpers oder durch die Innenwand der Ulbrichtkugel. Schließlich ist der Begriff "bifokal" gleichbedeutend mit "zwei Brennpunkte aufweisend" zu verstehen. Dabei versteht sich, da kein Hohlkörper oder Ellipsoidspiegel eine ideale Fokussierung von Licht in nur genau einen Punkt zu leisten vermag, dass unter dem Begriff "Brennpunkt" nicht ausschließlich genau ein Punkt im mathematischen Sinn verstanden wird, sondern auch ein gewisses kleines Volumen um den theoretischen Brennpunkt einschließt, dessen Größe von der Qualität des Hohlkörpers oder Spiegels abhängt.

Die freie Apertur des bifokalen Hohlkörpers wird vorzugsweise so gewählt, dass ein möglichst großer Anteil der Lumineszenz der Probe in den zweiten Brennpunkt fokussiert wird. Insbesondere wird die Apertur so gewählt, dass zumindest 70 %, insbesondere zumindest 80 %, vorzugsweise zumindest 90 %, der im ersten Brennpunkt emittierten Strahlung in den zweiten Brennpunkt fokussiert werden. Dabei beträgt ein Öffnungswinkel zwischen einer durch den ersten Brennpunkt und den freien Rand der Apertur verlaufenden Geraden zu der optischen Achse des Hohlkörpers höchstens 30°, insbesondere höchstens 20°, vorzugswiese höchstens 15°. Je kleiner dieser Raumwinkel ist, desto geringer ist ein durch Anisotropie der Lumineszenz verursachter Fehler. Bei einem Öffnungswinkel von 15° beträgt bei starker Anisotropie eine durch die Apertur verursachte Unsicherheit jedoch weniger als 2 %.

In einer besonders bevorzugter Ausgestaltung der Erfindung weist der bifokale Hohlkörper eine Lichteintrittsöffnung zur Einkopplung einer Anregungsstrahlung und eine Lichtaustrittsöffnung zur Auskopplung der durch die Probe transmittierten Strahlung auf, wobei beide Öffnungen auf einer gemeinsamen Achse mit dem ersten Brennpunkt angeordnet sind und diese Achse orthogonal zur (durch die beiden Brennpunkte definierten) optischen Achse des bifokalen Hohlkörpers verläuft. Durch diese Ausgestaltung wird erreicht, dass praktisch die gesamte nicht-absorbierte Strahlung (also die transmittierte Strahlung) den Hohlkörper wieder verlässt, ohne reflektiert zu werden, und einer von der Emissionsmesseinheit entkoppelten Absorptionsmesseinheit zugeführt werden kann.

Nach einer weiteren bevorzugten Ausgestaltung umfasst die Transmissions- bzw. Absorptionsmesseinheit der optischen Anordnung einen zweiten kugelförmigen Hohlkörper mit einer diffus reflektierenden Innenwand und mit einer Lichteintrittsöffnung und einer Lichtaustrittsöffnung. Der zweite kugelförmige Hohlkörper entspricht somit einer zweiten Ulbrichtkugel. Dabei ist dieser so angeordnet oder anordnenbar, dass eine aus dem bifokalen Hohlkörper tretende Strahlung (also die durch die Probe transmittierte Strahlung) durch die Lichteintrittsöffnung in den zweiten kugelförmigen Hohlkörper der Absorptionsmesseinheit eintritt und dort diffus reflektiert wird. Ebenso wie bei der Emissionsmesseinheit kann auch bei der Absorptionsmesseinheit mit Vorteil ein Spektrometer vorgesehen sein, welches an die Lichtaustrittsöffnung des kugelförmigen Hohlkörpers gekoppelt oder koppelbar ist und eine spektral aufgelöste Messung der auf die Lichtaustrittsöffnung fallenden Strahlung vornehmen kann. Im Falle der Absorptionsmesseinheit kann hierdurch eine Separierung der transmittierten Strahlung von einem geringen Anteil von Lumineszenzstrahlung erfolgen, welche durch die Lichtaustrittsöffnung des bifokalen Hohlkörpers der Emissionsmesseinheit austritt, wohingegen im Falle der Emissionsmesseinheit das an die Ulbrichtkugel angeschlossene Spektrometer eine Separierung der Lumineszenzstrahlung und der an der Probe elastisch gestreuten Strahlung ermöglicht.

Sowohl im Falle des kugelförmigen Hohlkörpers (Ulbrichtkugel) der Emissionsmesseinheit als auch der Absorptionsmesseinheit ist bevorzugt vorgesehen, dass die Lichtaustrittsöffnung außerhalb der optischen Achse des eingestrahlten Lichts liegt, vorzugsweise in einer Position von 90° zu dieser. Somit wird verhindert, dass die in die Ulbrichtkugel eingekoppelte Strahlung direkt auf die Lichtaustrittsöffnung fällt und ohne diffuse Reflektion wieder ausgekoppelt wird. Ein weiterer Vorteil dieser Ausgestaltung ist eine Reduzierung von Messunsicherheiten, die durch leicht veränderte Einkopplungsrichtungen in das Spektrometer verursacht werden können. Zusätzlich kann aus den gleichen Gründen in beiden Ulbrichtkugeln eine diffus reflektierende Abschirmung vor der Lichtaustrittsöffnung angeordnet sein, die den Primärstrahl abschirmt.

Die erfindungsgemäße Anordnung umfasst ferner Fokussierungsmittel zur Fokussierung des Anregungslichtstrahls in den ersten Brennpunkt des bifokalen Hohlkörpers und/oder zur Fokussierung des aus dem bifokalen Hohlkörper tretenden Transmissionslichts in die Ulbrichtkugel der Absorptionsmesseinheit. Beide Fokussierungsmittel können als Linsen oder- bevorzugt - als Paraboloidspiegel ausgestaltet sein. Das Anregungslicht wird vorzugsweise mit Hilfe eines Off-Axis-Paraboloidspiegels auf die Probe fokussiert, wobei der Fokus des Anregungslichtstrahls dabei im ersten Brennpunkt des bifokalen Hohlkörpers liegen sollte. Die Verwendung eines Parabolspiegels anstelle einer Linse hat hier den Vorteil, dass eine chromatische Aberration vermieden wird. Das transmittierte Licht wird bevorzugt mit einem zweiten Parabolspiegel oder einer Linse kollimiert und in den Messaufbau für die absolute Erfassung des Transmissionslichtes (d.h. in die Absorptionsmesseinheit) eingekoppelt.

Dieser Aufbau ermöglicht einerseits die exakte und von der Absorption entkoppelte Bestimmung der Emission und Streuung durch die Probe und andererseits die zeitgleiche Erfassung der Absorption, wodurch Fluktuationen in der Anregungslichtstrahlung erfasst und korrigiert werden.

Nach einer weiteren bevorzugten Ausgestaltung der Erfindung umfasst die optische Anordnung ferner einen Referenzdetektor zur Messung der Strahlungsleistung des in die Emissionsmesseinheit eingestrahlten Anregungslichtstrahls, welcher der Emissionsmesseinheit vorgeschaltet ist oder vorschaltbar ist. Die mit dem Referenzdetektor gemessene Strahlungsleistung wird über eine Kalibrierung mit der tatsächlichen Strahlungsleistung am Probenort korreliert. Auf diese Weise können der exakte Transmissionsgrad und/oder die Transmission und damit die Absorption zu jedem Zeitpunkt der Messung bestimmt werden.

Ein weiterer Aspekt der vorliegenden Erfindung betrifft ein Verfahren zur Bestimmung der absoluten Photolumineszenzquantenausbeute und/oder der Streuung einer lumineszierenden und/oder streuenden Probe. Das erfindungsgemäße Verfahren umfasst die Schritte:

- Anordnung der Probe im Bereich eines ersten Brennpunkts eines zwei konjugierte Brennpunkte aufweisenden, bifokalen Hohlkörpers,
- Fokussieren eines Anregungslichtstrahls in die Probe,

- Fokussieren eines von der Probe emittierten und/oder elastisch gestreuten Lichts in den zweiten Brennpunkt durch gerichtete Reflexion des Lichts an einer Innenwand des bifokalen Hohlkörpers,
- Sammlung des im zweiten Brennpunkt fokussierten Lumineszenz- und Streulichts und spektral aufgelöste Detektion der Strahlungsleistung des Lumineszenz- und des Streulichts,
- Bestimmung der gesamten von der Probe ausgehenden Streu- und Lumineszenzstrahlungsleistung,
- Sammlung und Detektion der Strahlungsleistung des transmittierten Lichts,
- Bestimmung der Strahlungsleistung des Anregungslichts,
- Berechnung der von der Probe absolut absorbierten Strahlungsleistung in Abhängigkeit von der Strahlungsleistung des Anregungslichts, des Streulichts und des transmittierten Lichts, und
- Berechnung der Lumineszenzquantenausbeute ($\phi$) aus dem Verhältnis der absoluten emittierten Photonenzahl ($N_{em}$) zu der absolut absorbierten Photonenzahl (Nabs).

In bevorzugter Ausführung des Verfahrens wird das im zweiten Brennpunkt des bifokalen Hohlkörpers fokussierte Lumineszenz- und Streulicht in einem Hohlraum eines ersten kugelförmigen Hohlkörpers (Ulbrichtkugel) diffus an dessen Innenwand reflektiert und in ein Spektrometer zur spektral aufgelösten Detektion der Strahlungsleistung des Lumineszenz- und des Streulichts eingekoppelt.

Weiterhin erfolgt vorzugsweise die Bestimmung der transmittierten Strahlung durch Fokussieren derselben in den Hohlraum eines zweiten kugelförmigen Hohlkörpers (Ulbrichtkugel) der oben beschriebenen Absorptionsmesseinrichtung, diffuse Reflektion der Strahlung in dem Hohlkörper an dessen diffus reflektierenden Innenwand und spektral aufgelöste Detektion der Strahlungsleistung des diffus reflektierten Lichts.

Eine spezifischere Erläuterung des Verfahrens zur Bestimmung der absoluten Photolumineszenzquantenausbeute erfolgt in einem Ausführungsbeispiel unten.

Weitere bevorzugte Ausgestaltungen der Erfindung sind Gegenstand der übrigen Unteransprüche.

Die Erfindung wird nachfolgend in Ausführungsbeispielen anhand der zugehörigen Zeichnungen erläutert. Es zeigen:

Figur 1    schematisch den Gesamtaufbau einer optischen Anordnung zur Bestim- mung der absoluten Lumineszenzquantenausbeute gemäß einer bevor- zugten Ausgestaltung der Erfindung und

Figur 2    eine Detailansicht der Emissionsmesseinheit der optischen Anordnung aus Figur 1.

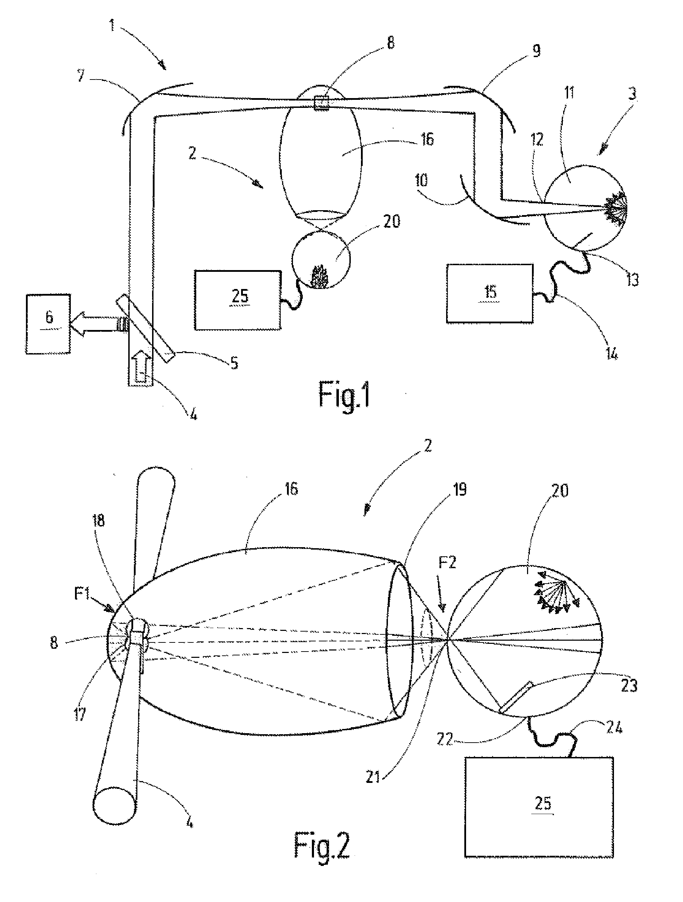

Die in Figur 1 dargestellte und insgesamt mit 1 bezeichnete optische Anordnung umfasst als wesentliche Baugruppen eine Emissionsmesseinheit 2 sowie eine Absorptionsmesseinheit 3.

Eine monochromatische Strahlung 4 (das Anregungslicht) einer geeigneten Strahlungsquelle (nicht dargestellt), beispielsweise eines monochromatischen Lasers, trifft zunächst auf einen Strahlteiler 5, der beispielsweise in Form eines halbdurchlässigen Spiegels oder eines sogenannten Shoppers ausgestaltet sein kann. Der von dem Strahlteiler 5 reflektierte Strahlungsanteil wird in einen Referenzdetektor 6 eingekoppelt, mit dem der Strahlungsfluss (Strahlungsleistung), also die Strahlungsintensität pro Zeiteinheit, am Probenort mit Hilfe einer entsprechenden Kalibrierung (s. u.) bestimmt werden kann.

Die von dem Strahlteiler 5 durchgelassene Strahlung trifft auf einen ersten Paraboloidspiegel 7, welcher die Strahlung auf eine, in der Emissionsmesseinheit 2 angeordnete Probe 8 fokussiert. In der Probe 8 kommt es zu einer Absorption eines Teils der Strahlung und infolgedessen zu einer Emission in Form von Fluoreszenz oder Phosphoreszenz. Ein weiterer Teil des in die Probe 8 einfallenden Anregungslichtstrahls kann in Abhängigkeit von der Probenbeschaffenheit elastisch gestreut werden. Der nicht von der Probe 8 absorbierte oder gestreute Anteil der Strahlung verlässt die Probe 8 als transmittiertes Licht. Neben dieser Transmissionsstrahlung enthält der die Emissionsmesseinheit 2 verlassende Strahl auch geringe Anteile der von der Probe 8 emittierten Lumineszenzstrahlung. Das transmittierte Licht trifft auf eine Fokussiervorrichtung in Form zweier weiterer Paraboloidspiegel 9 und 10, von wo sie die auf die Absorptionsmesseinrichtung 3 gelenkt und dort fokussiert wird.

Die Transmissions-/Absorptionsmesseinrichtung 3 umfasst einen kugelförmigen Hohlkörper 11, eine so genannte Ulbrichtkugel, in der die Strahlung durch eine Lichteintrittsöffnung 12 eingelenkt und fokussiert wird. Die Ulbrichtkugel 11 weist eine diffus reflektierende Innenwand auf, beispielsweise in Form einer mikrotexturierten Beschichtung, welche im Idealfall die Strahlung nicht absorbiert, dafür jedoch im Inneren der Kugel homogen, isotrop und unpolarisiert verteilt. Die Ulbrichtkugel 11 umfasst ferner eine Lichtaustrittsöffnung 13, an welcher die dort auftreffende Strahlung ausgekoppelt und beispielsweise über ein Glasfaserkabel 14 in ein Spektrometer 15 eingekoppelt wird, welches vorzugsweise als CCD-Spektrometer ausgestaltet ist. Das Spektrometer 15 misst die Intensität der Strahlung energieabhängig und hat in erster Linie die Funktion, das nicht mit der Probe wechselwirkende, transmittierte Licht (das die gleiche Wellenlänge wie das eingestrahlte Anregungslicht aufweist) von dem Lumineszenzlicht (das eine niedrigere Energie aufweist und somit zu größeren Wellenlängen verschoben ist) spektral zu separieren. Aus dem so erfassten Spektrum kann die Strahlungsintensität der Transmissionsstrahlung bestimmt werden. Um die absolute Transmission des Strahlungsflusses durch die Probe 8 zu erhalten, muss die absolute spektrale Empfindlichkeit des kompletten Transmissionskanals, umfassend die Hohlspiegel 7, 9, 10, die Ulbrichtkugel 11, das Glasfaserkabel 14 und das CCD-Spektrometer 15, bekannt sein.

Zur Ermittlung der absoluten von der Probe 8 absorbierten Strahlung, wird der transmittierte Strahlungsfluss und der mit der Emissionseinheit 2 gemessene Fluss der Streustrahlung von dem mit dem Referenzdetektor 6 gemessenen Anregungsstrahlungsfluss subtrahiert (s. u.). Die drei Messungen finden zeitgleich statt.

Nachfolgend wird die Ermittlung der Emission mit Hilfe der Emissionsmesseinheit 2 anhand der Figur 2 näher erläutert. Zentrale Komponente der erfindungsgemäßen Emissionsmesseinheit 2 ist ein bifokaler Hohlkörper 16, der zwei konjugierte Brennpunkte F1 und F2 aufweist und der insbesondere ein Ellipsoid ist. Der Ellipsoid 16 weist eine gerichtet reflektierende Innenwand, beispielsweise in Form einer hochglatten Spiegelbeschichtung auf, so dass durch die Reflexion an der Innenwand eine im ersten Brennpunkt F1 erzeugte Strahlung mit einem möglichst geringen Abbildungsfehler in den zweiten Brennpunkt F2 fokussiert wird. Der monochromatische Anregungslichtstrahl 4 tritt durch eine möglichst kleine Lichteintrittsöffnung 17 auf die Probe 8 und der nicht absorbierte und nicht gestreute Anteil verlässt, ohne reflektiert zu werden, als Transmissionslichtstrahl den Hohlkörper 16 durch eine in dem Ellipsoiden 16 vorgesehene ebenfalls möglichst kleine Lichtaustrittsöffnung 18. Die Lichteintrittsöffnung 17, der erste Brennpunkt F1 mit der dort angeordneten Probe 8 sowie die Lichtaustrittsöffnung 18 liegen auf einer gemeinsamen Achse, die der Ausbreitungsrichtung des eingestrahlten Lichts 4 entspricht und senkrecht zur einer durch die Brennpunkte F1 und F2 definierte optische Achse des Ellipsoiden 16 verläuft. Eine dritte kleine Öffnung kann im unteren Teil des Ellipsoiden 16 vorgesehen sein, um eine hier nicht näher dargestellte Probenaufnahme zur Anordnung der Probe 8 einbringen zu können. Der Ellipsoid 16 kann aus mehreren Teilstücken zusammengesetzt sein, insbesondere aus zwei Teilschalen, um einerseits die Positionierung und Ausrichtung der Probe 8 leichter handhaben zu können, und andererseits, um eine Kalibrierung der spektralen Empfindlichkeit zu ermöglichen.

Der Ellipsoid 16 weist ferner auf der Seite des zweiten Brennpunkts F2 eine rotationssymmetrisch um die optische Achse des Ellipsoiden 16 verlaufende freie Apertur 19 auf, deren Durchmesser so gewählt ist, dass ein möglichst großer Anteil der im ersten Brennpunkt F1 emittierten Strahlung in den zweiten Brennpunkt F2 reflektiert und fokussiert wird. Vorzugsweise werden zumindest 90 % der im ersten Brennpunkt F1 durch die bestrahlte Probe 8 abgegebene Emissions- und Streustrahlung eingesammelt und im zweiten Brennpunkt F2 abgebildet.

Das in dem zweiten Brennpunkt F2 fokussierte Emissions- und Streulicht wird im dargestellten Beispiel in einen weiteren kugelförmigen Hohlkörper 20 nach Art einer weiteren Ulbrichtkugel durch eine in dieser vorgesehene Lichteintrittsöffnung 21 eingekoppelt. Bevorzugt wird die relative Anordnung des Ellipsoiden 16 und Ulbrichtkugel 20 so gewählt, dass der zweite Brennpunkt F2 derart in der Nähe der Öffnung 21 liegt, dass praktisch das gesamte Licht eingekoppelt werden kann. Im dargestellten Beispiel wird der zweite Brennpunkt F2 von der Ulbrichtkugel 20 eingeschlossen. Zudem sollte der Durchmesser der Öffnung 21 möglichst klein konstruiert werden. Die Ausführung der Ulbrichtkugel 20 der Emissionsmesseinheit 2 entspricht der der Ulbrichtkugel 11 der Absorptionsmesseinheit 2. So weist auch diese eine diffus reflektierende Innenwand sowie eine Lichtaustrittsöffnung 22 auf, welche durch eine Abschirmung 23 mit ebenfalls diffus reflektierenden Eigenschaften von der von dem zweiten Brennpunkt F2 ausgehenden Primärstrahlung abgeschirmt sein kann. Das in der Ulbrichtkugel 20 homogen und unpolarisiert gestreute und auf die Lichtaustrittsöffnung 22 treffende Lumineszenz- und Streulicht der Probe 8 wird über ein Glasfaserkabel 24 in ein weiteres Spektrometer 25, das ebenfalls bevorzugt ein CCD-Spektrometer ist, eingekoppelt. Das Spektrometer 25 misst die energieabhängige Intensität der Strahlung, wodurch die Lumineszenzstrahlung von dem durch die Probe 8 gestreuten Licht (dessen Wellenlänge dem des Anregungsstrahls 4 entspricht) diskriminiert werden kann.

Für die Berechnung der Lumineszenzquantenausbeute muss die absolute Emission gemessen werden. Dafür muss die gesamte Emissionseinheit, umfassend das Ellipsoid 16, die Ulbrichtkugel 20, das Glasfaserkabel 24 sowie das Spektrometer 25 absolut bezüglich der spektralen Empfindlichkeit kalibriert werden. Dies bedeutet, dass eine bei einer bestimmten Wellenlänge gemessene Strahlungsleistung eindeutig einer tatsächlichen Emissionsintensität (Strahlungsleistung) am Probenort zugeordnet wird. Darüber hinaus müssen der durch die freie Apertur 19 definierte Raumwinkel, unter welchem die Emission erfasst wird, sowie die Strahlungsverluste durch die Lichteintritts- und Lichtaustrittsöffnung 17 und 18 sowie der Öffnung für die Probenhalterung berücksichtigt werden.

Eine gewisse geringe Unsicherheit ergibt sich durch Anisotropien der Lumineszenz, d.h. durch eine Varianz in der Abstrahlung bezüglich der Raumrichtungen, da die nicht reflektierte und durch die freie Apertur 19 entweichende Strahlung nicht erfasst wird. Aus diesem Grund wird der Öffnungswinkel bezüglich der Rotationsachse möglichst klein gewählt. So ergibt sich beispielsweise bei einem Öffnungswinkel von 15° lediglich eine zusätzliche Unsicherheit von weniger als 2% bei einer stark anisotropen Probe.

Die in den Figuren 1 und 2 dargestellte Anordnung weist gegenüber dem Stand der Technik, welcher zur Messung der Lumineszenzquantenausbeute die Probe in einer Ulbrichtkugel anordnet, mehrere Vorteile auf. Erstens werden durch die unmittelbare Auskopplung des Lumineszenzlichts der Probe aus dem Ellipsoiden eine Reabsorption und damit eine Verfälschung der ermittelten Quantenausbeute vermieden. Durch die Verwendung des Ellipsoiden gelingt darüber hinaus die gesonderte Ermittlung der Streuung durch die Probe und die Erfassung ortsspezifischer Lumineszenz- und/oder Streueffekte. Schließlich ermöglicht die Entkopplung der Emissionsbestimmung von der Absorptionsbestimmung die gleichzeitige Durchführung beider Bestimmungen und somit die Kompensation von Fluktuationen des Anregungslichts. Im Ergebnis erlaubt die Erfindung die Bestimmung der absoluten Lumineszenzquantenausbeute mit einer wesentlich höheren Präzision gegenüber dem Stand der Technik.

Die Durchführung der Bestimmung der absoluten Lumineszenzquantenausbeute und/oder der Streuung einer lumineszierenden und/oder streuenden Probe 8 weist drei grundsätzliche Verfahrensabschnitte auf: (1) Kalibrierung der optischen Anordnung, (2) Durchführung der Messung und (3) rechnerische Bestimmung der Photolumineszenz anhand der aus der Messung gewonnen Daten. Diese Verfahrensabschnitte umfassen vorzugsweise die nachfolgend näher dargestellten Schritte.

(1) Kalibrierung der optischen Anordnung

Die nachfolgenden Kalibrierungen beziehen sich alle auf den Probenort.

- Kalibrierung der Emissionseinheit 1: Bestimmung der absoluten spektralen Empfindlichkeit (z.B. mit einem kalibrierten Detektor)
- Kalibrierung der Transmissionseinheit 3: Bestimmung der absoluten spektralen Empfindlichkeit (z.B. mit einem kalibrierten Detektor)
- Kalibrierung des Referenzdetektors 6: Bestimmung der absoluten spektralen Empfindlichkeit und Korrelation mit der spektralen Leistung am Probenort (z.B. mit kalibrierten Detektor)
- Berechnung des Raumwinkels für die Detektion der Emission und Berücksichtigung der Verluste durch die Öffnungen (Lichteintrittsöffnung 17, Lichtaustrittsöffnung 18, ggf. Öffnung für Probenhalterung, freie Apertur 19) im bifokalen Hohlkörper 16

(2) Durchführung der Messung

- Anordnung der Probe 8 im Bereich des ersten Brennpunkts F1 des bifokalen Hohlkörpers 16
- Einstrahlung bzw. Fokussierung des Anregungsstrahles 4 auf die Probe 8, so dass der Fokus und der erste Brennpunkt F1 des bifokalen Hohlkörpers 16 überlappen
- Kollimation des von der Probe emittierten und gestreuten Lichts in einem großen Raumwinkel durch die besondere Konstruktion des bifokalen Hohlkörpers 16: Fokussierung in den zweiten Brennpunkt F2 des Hohlkörpers 16 und Kollimation des im zweiten Brennpunkt F2 fokussierten Lichts durch eine weitere geeignete Optik (Ulbrichtkugel 20 oder Linse mit großer Apertur)
- Einkopplung des kollimierten Lumineszenz- und Streulichtes in ein CCD-Spektrometer 25
- spektral aufgelöste Detektion der Strahlungsleistung des Lumineszenz- und Streulichts
- Kollimation des transmittierten Anregungslichts und Detektion der Strahlungsleistung des transmittierten Lichts
- Bestimmung der Strahlungsleistung des Anregungslichtes mit Hilfe der Messung mit dem vorgeschalteten Referenzdetektor 6

(3) rechnerische Bestimmung der Photolumineszenz

- Berechnung des von der Probe 8 absolut absorbierten Lichts (Strahlungsleistung) mit Hilfe der Messdaten der Transmission, elastischen Streuung und der auf die Probe 8 eingestrahlten Leistung unter Berücksichtigung der Kalibrierungen in (1)
- Berechnung der durch die Probe 8 in alle Raumrichtungen emittierte Lumineszenz (Strahlungsleistung) mit Hilfe der Messdaten für die Lumineszenz (Lumineszenzmessung mit bifokalem Hohlkörper 16, Lumineszenz in Transmissionsrichtung) unter Berücksichtigung der Kalibrierungen und der Verluste durch die Öffnungen im bifokalen Hohlkörper
- Berechnung der Photolumineszenz-Quantenausbeute $\Phi$ aus dem Verhältnis der absolut emittierten Photonenzahlen $N_{em}$ zu den absolut absorbierten Photonenzahlen $N_{abs}$ bei Verwendung von monochromatischem Anregungslicht gemäß Gleichung 1.

$$\Phi \; = \; \frac{N_{em}}{N_{abs}} \; = \; \frac{G \int\limits_{\lambda' > \lambda_x}^{\infty} \frac{\lambda \, I_\lambda(\lambda)}{s(\lambda)} d\lambda}{\lambda_x \, P_{abs}} \qquad (1)$$

In Gleichung 1 ist G (>1) ein dimensionsloser Faktor, der die Verluste durch die Öffnungen im ellipsoidähnlichen Hohlkörper berücksichtigt. Für die Berechnung der emittierten Photonenzahlen wird über das komplette im Spektrometer 25 gemessene Lumineszenzspektrum integriert. $\lambda$ bezeichnet hier die Wellenlänge des Lichts, $I_\lambda$ ($\lambda$) ist das mit dem Detektor im Spektrometer 25 gemessene spezifische spektrale Signal (z.B. Stromstärke bei einer spezifischen Wellenlänge [A/m]) und $s(\lambda.)$ ist die spektrale Empfindlichkeit der kompletten Emissionsmesseinheit 2 (bifokaler Hohlkörper 16, Ulbrichtkugel 20 und Glasfaser 24 oder Linsensystem, Spektrometer 25, CCD-Detektor), die aus der Kalibrierung (1) bekannt ist. $P_{abs}$ ist die absolute absorbierte Strahlungsleistung bei der monochromatischen Anregungswellenlänge $\lambda_x$ und ergibt sich aus Gleichung 2.

$$P_{abs} = \; P_x(\lambda_x) \; - \; \frac{I_T(\lambda_x)}{s_T(\lambda_x)} \; - \; G \frac{I_{Streu}(\lambda_x)}{s(\lambda_x)} \qquad (2)$$

Hier ist $P_x(\lambda_x)$ die auf die Probe 8 eingestrahlte Strahlungsleistung. Der zweite Term auf der rechten Seite ist die transmittierte Strahlungsleistung mit dem Messsignal $I_T(\lambda_x)$ und der spektralen Empfindlichkeit $S_T(\lambda_x)$ des kompletten Transmissionskanals (Kollimatoroptik 9, 10, Ulbrichtkugel 11, Spektrometer 15 und dessen CCD-Detektor). Der dritte Term auf der rechten Seite berücksichtigt die an der Probe 8 gestreute Strahlung, die ebenfalls mit der Emissionsmesseinheit 2 (Messsignal $I_{Streu}(\lambda_x)$) gemessen wird. Zur Bestimmung der auf die Probe 8 eingestrahlten Strahlungsleistung $P_x(\lambda_x)$ wird das mit dem Referenzdetektor 6 gemessene Messsignal $I_x(\lambda_x)$ über eine dimensionslose Kalibrierfunktion $f$ ($\lambda_x$) gemäß Gleichung 3 korreliert, in welcher $S_R(\lambda_x)$ die spektrale Empfindlichkeit des Referenzdetektors 6 ist.

$$P_x(\lambda_x) = \frac{I_R(\lambda_x)}{s_R(\lambda_x)} f(\lambda_x) \qquad (3)$$

BEZUGSZEICHENLISTE

1    optische Anordnung
2    Emissionsmesseinheit
3    Absorptionsmesseinheit (Transmissionsmesseinheit)
4    monochromatische Strahlung
5    Strahlteiler
6    Referenzdetektor
7    erster Paraboloidspiegel
8    Probe
9    zweiter Paraboloidspiegel
10   dritter Paraboloidspiegel
11   erster kugelförmiger Hohlkörper (Ulbrichtkugel)
12   Lichteintrittsöffnung
13   Lichtaustrittsöffnung
14   Glasfaserkabel
15   Spektrometer
16   bifokaler Hohlkörper / Ellipsoid
17   Lichteintrittsöffnung
18   Lichtaustrittsöffnung
19   freie Apertur

20    zweiter kugelförmiger Hohlkörper (Ulbrichtkugel)
21    Lichteintrittsöffnung
22    Lichtaustrittsöffnung
23    Abschirmung
24    Glasfaserkabel
25    Spektrometer

F1    erster Brennpunkt
F2    zweiter Brennpunkt

**Patentansprüche**

1.  Optische Anordnung (1) zur Bestimmung der absoluten Lumineszenzquantenausbeute einer lumineszierenden Probe (8) mit

    (a) einer Emissionsmesseinheit (2) umfassend:

    - einen bifokalen Hohlkörper (16) mit zwei konjugierten Brennpunkten (F1, F2) und mit einer gerichtet reflektierenden Innenwand, wobei der Hohlkörper (16) im Bereich des ersten Brennpunkts (F1) eine Probenaufnahme zur Anordnung der Probe (8) und auf der Seite des zweiten Brennpunkts (F2) eine freie Apertur (19) aufweist, und
    - eine optische Einrichtung zur Sammlung des im zweiten Brennpunkt (F2) fokussierten Lichts und Einkopplung in ein Spektrometer,

    und mit

    (b) einer Absorptionsmesseinheit (3) zur Erfassung einer von der Probe (8) transmittierten Strahlung.

2.  Optische Anordnung (1) nach Anspruch 1, wobei der bifokale Hohlkörper (16) ein Ellipsoid oder ein ellipsoidähnlicher Hohlkörper, insbesondere ein Rotationsellipsoid, ist.

3.  Optische Anordnung (1) nach einem der vorhergehenden Ansprüche, wobei ein Durchmesser der freien Apertur (19) des bifokalen Hohlkörpers (16) so gewählt ist, dass zumindest 70 %, insbesondere zumindest 80 %, vorzugsweise zumindest 90 %, einer am ersten Brennpunkt (F1) emittierten Strahlung in dem zweiten Brennpunkt (F2) fokussiert werden.

4.  Optische Anordnung (1) nach einem der vorhergehenden Ansprüche, wobei ein Öffnungswinkel zwischen einer durch den ersten Brennpunkt (F1) und einen Rand der freien Apertur (19) verlaufenen Geraden und der Rotationsachse des bifokalen Hohlkörpers (16) höchstens 30°, insbesondere höchstens 20°, vorzugsweise höchstens 15°, beträgt.

5.  Optische Anordnung (1) nach einem der vorhergehenden Ansprüche, wobei der bifokale Hohlkörper (16) eine Lichteintrittsöffnung (17) und eine Lichtaustrittsöffnung (18) aufweist, die gemeinsam mit dem ersten Brennpunkt (F1) auf einer, senkrecht zur optischen Achse des bifokalen Hohlkörpers (16) verlaufenden Achse angeordnet sind.

6.  Optische Anordnung (1) nach einem der vorhergehenden Ansprüche, wobei die optische Einrichtung zur Sammlung des im zweiten Brennpunkt (F2) fokussierten Lichts einen kugelförmigen Hohlkörper (20) mit einer diffus reflektierenden Innenwand und mit einer Lichteintrittsöffnung (21) und einer Lichtaustrittsöffnung (22) zur Einkopplung des Lichts in ein Spektrometer umfasst, wobei der kugelförmige Hohlkörper (20) so anordnenbar oder angeordnet ist, dass die Lichteintrittsöffnung (21) des kugelförmigen Hohlkörpers (10) in einer durch die beiden Brennpunkte (F1, F2) des bifokalen Hohlkörpers (16) definierten optischen Achse liegt.

7.  Optische Anordnung (1) nach Anspruch 6, wobei der kugelförmige Hohlkörper (10) so anordnenbar oder angeordnet ist, dass er den zweiten Brennpunkt (F2) des bifokalen Hohlkörpers (16) einschließt.

8.  Optische Anordnung (1) nach einem der vorhergehenden Ansprüche, wobei die Emissionsmesseinheit (2) ferner ein an die Einrichtung zur Sammlung des im zweiten Brennpunkt (F2) fokussierten Lichts, insbesondere an die Lichtaustrittsöffnung (22) des kugelförmigen Hohlkörpers (20), gekoppeltes oder koppelbares Spektrometer (25) zur spektral aufgelösten Messung des Lichts umfasst.

9. Optische Anordnung (1) nach einem der vorhergehenden Ansprüche, wobei die Absorptionsmesseinheit (3) einen zweiten kugelförmigen Hohlkörper (11) umfasst mit einer diffus reflektierenden Innenwand und mit einer Lichteintrittsöffnung (12) und einer Lichtaustrittsöffnung (13), wobei der zweite kugelförmige Hohlkörper (11) so anordnenbar oder angeordnet ist, dass ein aus dem bifokalen Hohlkörper (16) tretendes transmittiertes Licht in den zweiten kugelförmigen Hohlkörper (11) eintritt.

10. Optische Anordnung (1) nach einem der vorhergehenden Ansprüche, wobei die Lichtaustrittsöffnung (13, 22) des kugelförmigen Hohlkörpers (20) der Emissionsmesseinheit (2) und/oder des zweiten kugelförmigen Hohlkörpers (11) der Absorptionsmesseinheit (3) außerhalb einer optischen Achse des eingestrahlten Lichts liegt, insbesondere in einer Position von 90° zur dieser.

11. Optische Anordnung (1) nach einem der vorhergehenden Ansprüche, ferner umfassend Fokussierungsmittel, insbesondere in Form eines oder mehrerer Paraboloidspielgel (9, 10), zur Fokussierung eines Anregungslichtstrahls in den ersten Brennpunkt (F1) des bifokalen Hohlkörpers (16) und/oder zur Fokussierung des aus den bifokalen Hohlkörper (16) tretenden transmittierten Lichts in den zweiten kugelförmigen Hohlkörper (11) der Absorptionsmesseinheit (3).

12. Optische Anordnung (1) nach einem der vorhergehenden Ansprüche, ferner umfassend einen, der Emissionsmesseinheit (2) vorgeschalteten oder vorschaltbaren Referenzdetektor (6) zur Messung einer Strahlungsleistung eines in die Emissionsmesseinheit (2) eingestrahlten Anregungslichtstrahls.

13. Verfahren zur Bestimmung der absoluten Lumineszenzquantenausbeute und/oder der Streuung einer lumineszierenden und/oder streuenden Probe mit den Schritten

- Anordnung der Probe (8) im Bereich eines ersten Brennpunkts (F1) eines zwei konjugierte Brennpunkte (F1, F2) aufweisenden, bifokalen Hohlkörpers (16),
- Fokussieren eines Anregungslichtstrahls (4) in die Probe (8),
- Fokussieren des von der Probe emittierten und/oder elastisch gestreuten Lichts in den zweiten Brennpunkt (F2) durch gerichtete Reflexion des Lichts an einer Innenwand des bifokalen Hohlkörpers (16),
- Sammlung des im zweiten Brennpunkt (F2) fokussierten Lumineszenz- und Streulichts und spektral aufgelöste Detektion der Strahlungsleistung des Lumineszenz- und des Streulichts,
- Bestimmung der gesamten von der Probe ausgehenden Streu- und Lumineszenzstrahlungsleistung,
- Sammlung und Detektion der Strahlungsleistung des durch die Probe (8) transmittierten Lichts,
- Bestimmung der Strahlungsleistung des Anregungslichts,
- Berechnung der von der Probe (8) absolut absorbierten Strahlungsleistung in Abhängigkeit von der Strahlungsleistung des Anregungslichts, des Streulichts und des transmittierten Lichts,
- Berechnung der Lumineszenzquantenausbeute ($\phi$) aus dem Verhältnis der absoluten emittierten Photonenzahl ($N_{em}$) zu den absolut absorbierten Photonenzahl (Nabs).

14. Verfahren nach Anspruch 13, wobei das im zweiten Brennpunkt (F2) fokussierte Lumineszenz- und Streulicht in einem Hohlraum eines ersten kugelförmigen Hohlkörpers (20) diffus an dessen Innenwand reflektiert wird und in ein Spektrometer (25) zur spektral aufgelösten Detektion der Strahlungsleistung des Lumineszenz- und des Streulichts eingekoppelt wird.

15. Verfahren nach Anspruch 13 oder 14, wobei die Sammlung und Detektion der Strahlungsleistung des transmittierten Lichts durch Einkoppeln und Fokussieren des durch die Probe (8) transmittierten Lichts in einen Hohlraum eines zweiten kugelförmigen Hohlkörpers (11), diffuse Reflexion des Lichts an dessen Innenwand und spektral aufgelöste Detektion der Strahlungsleistung des diffus reflektierten Lichts erfolgt.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Greenham ; Samuel ; Hayes ; Phillips ; Kessener ; Moratti ; Holmes ; Friend.** *Chem. Phys. Lett.,* 1995, vol. 241, 89
- **Shea Rohwer ; Martin.** *J. Lumin.,* 2005, vol. 115, 77